# EUROPEAN PATENT SPECIFICATION

(11) **EP 3 146 662 B1**
(45) Date of publication and mention of the grant of the patent: **08.04.2020**
(21) Application number: 15725198.4
(22) Date of filing: 14.05.2015
(51) Int. Cl.: H04L 1/16, H04L 1/18

(54) **APPARATUS, METHODS, AND COMPUTER PROGRAM PRODUCTS PROVIDING POWER SAVINGS IN SPS-CONFIGURED VOLTE WITH C-DRX**
VORRICHTUNG, VERFAHREN UND COMPUTERPROGRAMMPRODUKTE ZUR ENERGIEEINSPARUNG BEI SPS-KONFIGURIERTEM VOLTE MIT C-DRX
APPAREIL, PROCÉDÉS, ET PRODUITS PROGRAMMES D'ORDINATEUR PERMETTANT D'ÉCONOMISER L'ÉNERGIE DANS UN SYSTÈME VOLTE CONFIGURÉ SPS EN MODE C-DRX

(30) Priority: 21.05.2014 US 201414284151
(43) Date of publication of application: 29.03.2017
(73) Proprietor: Qualcomm Incorporated, San Diego, CA 92121-1714 (US)
(72) Inventor: HWANG, Insoo, San Diego, California 92121-1714 (US); SONG, Bongyong, San Diego, California 92121-1714 (US); DAS, Soumya, San Diego, California 92121-1714 (US); GUPTA, Ajay, San Diego, California 92121-1714 (US)
(74) Representative: Emde, Eric
(86) International application number: PCT/US2015/030875
(87) International publication number: WO 2015/179212

(56) References cited:
- EP-A1- 2 661 138
- WO-A1-2013/176695
- US-A- 5 727 002
- US-B1- 7 978 626
- LEE T ET AL: "ABC: A simple geographic forwarding scheme capable of bypassing routing holes in sensor networks", AD HOC NETWORKS, ELSEVIER, AMSTERDAM, NL, vol. 8, no. 4, 1 June 2010 (2010-06-01), pages 361-377, XP026883577, ISSN: 1570-8705, DOI: 10.1016/J.ADHOC.2009.08.004 [retrieved on 2009-08-22]

## Description

### CROSS-REFERENCE TO RELATED APPLICATIONS

### TECHNICAL FIELD

The present disclosure relates generally to communication systems, and more particularly, to apparatus, methods, and computer program products providing power savings in Semi-Persistent Scheduling (SPS)-configured Voice over Long Term Evolution (VoLTE) with Connected State Discontinuous Reception (C-DRX).

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example of an emerging telecommunication standard is Long Term Evolution (LTE). LTE is a set of enhancements to the Universal Mobile Telecommunications System (UMTS) mobile standard promulgated by Third Generation Partnership Project (3GPP). LTE is designed to better support mobile broadband Internet access by improving spectral efficiency, lowering costs, improving services, making use of new spectrum, and better integrating with other open standards using OFDMA on the downlink (DL), SC-FDMA on the uplink (UL), and multiple-input multiple-output (MIMO) antenna technology. However, as the demand for mobile broadband access continues to increase, there exists a need for further improvements in LTE technology. Preferably, these improvements should be applicable to other multi-access technologies and the telecommunication standards that employ these technologies.

Discontinuous reception (DRX) may reduce power consumption during periods of reduced activity. With DRX, the UE can determine periods when data transfer may occur. During periods when data transfer may occur, the UE may have its receiver and/or transmitter turned on. During periods when data transfer may not occur, the UE may have its receiver and/or transmitted turned off. DRX provides some power savings to the UE, especially with semi-persistent scheduling. Although DRX with semi-persistent scheduling provides some power savings to the UE, further enhancements to existing communication systems are needed to provide additional power savings to the UE.

Reference is made to document WO 2013/176695 A1, which describes systems and methods for handling of an uplink transmission collision with an ACK/NACK signal. An ACK/NACK may be configured for a repetition sequence. The ACK/NACK signal transmission on a particular subframe can be refrained due to the collision. The UL transmission can be performed on the subframe.

### SUMMARY

In accordance with the present invention, a method and apparatus for wireless communication, as set forth in the independent claims, is provided. Embodiments of the invention are claimed in the dependent claims.

The following presents a simplified summary of one or more aspects of the present disclosure, in order to provide a basic understanding of such aspects. This summary is not an extensive overview of all contemplated features of the disclosure, and is intended neither to identify key or critical elements of all aspects of the disclosure nor to delineate the scope of any or all aspects of the disclosure. Its sole purpose is to present some concepts of one or more aspects of the disclosure in a simplified form as a prelude to the more detailed description that is presented later.

Method, apparatus, and computer program products providing power savings in semi-persistent scheduling (SPS)-configured VoLTE with C-DRX are provided.

In one aspect, the disclosure provides a method for wireless communication including receiving a packet when the UE is in an SPS mode; transmitting a negative-acknowledgement (NACK) message when the packet is not successfully decoded; and refraining from transmitting an acknowledgement (ACK) message when the packet is successfully decoded.

In another aspect, the disclosure provides an apparatus for wireless communication including means for receiving a packet when the UE is in an SPS mode; means for transmitting a NACK message when the packet is not successfully decoded; and means for refraining from transmitting an ACK message when the packet is successfully decoded.

In another aspect, the disclosure provides an apparatus for wireless communication including a memory and at least one processor coupled to the memory and configured to receive a packet when the UE is in an SPS mode; transmit a NACK message when the packet is not successfully decoded; and refrain from transmitting an ACK message when the packet is successfully decoded.

In another aspect, the disclosure provides a computer program product including a computer-readable medium including code for receiving a packet when the UE is in an SPS mode; transmitting a NACK message when the packet is not successfully decoded; and refraining from transmitting an ACK message when the packet is successfully decoded.

These and other aspects of the invention will become more fully understood upon a review of the detailed description, which follows. Other aspects, features, and embodiments of the present invention will become apparent to those of ordinary skill in the art, upon reviewing the following description of specific, exemplary embodiments of the present invention in conjunction with the accompanying figures. While features of the present invention may be discussed relative to certain embodiments and figures below, all embodiments of the present invention can include one or more of the advantageous features discussed herein. In other words, while one or more embodiments may be discussed as having certain advantageous features, one or more of such features may also be used in accordance with the various embodiments of the invention discussed herein. In similar fashion, while exemplary embodiments may be discussed below as device, system, or method embodiments it should be understood that such exemplary embodiments can be implemented in various devices, systems, and methods.

### BRIEF DESCRIPTION OF THE DRAWINGS

FIG. 1 is a diagram illustrating an example of a network architecture.
FIG. 2 is a diagram illustrating an example of an access network.
FIG. 3 is a diagram illustrating an example of a DL frame structure in LTE.
FIG. 4 is a diagram illustrating an example of an UL frame structure in LTE.
FIG. 5 is a diagram illustrating an example of a radio protocol architecture for the user and control planes.
FIG. 6 is a diagram illustrating an example of an evolved Node B and user equipment in an access network.
FIGS. 7A-7B are diagrams illustrating first examples of communication between a UE and an eNB without retransmission during talk and listen states.
FIGS. 8A-8B are diagrams illustrating first examples of communication between a UE and an eNB with retransmission during talk and listen states.
FIGS. 9A-9B are diagrams illustrating second examples of communication between a UE and an eNB without retransmission during talk and listen states.
FIGS. 10A-10B are diagrams illustrating second examples of communication between a UE and an eNB with retransmissions during talk and listen states.
FIG. 11 is a diagram illustrating a first example of signaling used to switch between talk and listen states.
FIG. 12 is a diagram illustrating a second example of signaling used to switch between talk and listen states.
FIG. 13 is a flow chart of example methods of wireless communication.
FIG. 14 is a conceptual data flow diagram illustrating the data flow between different modules/means/components in an exemplary apparatus.
FIG. 15 is a diagram illustrating an example of a hardware implementation for an apparatus employing a processing system.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, modules, components, circuits, steps, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

Accordingly, in one or more exemplary embodiments, the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can include a random-access memory (RAM), a read-only memory (ROM), an electrically erasable programmable ROM (EEPROM), compact disk ROM (CD-ROM) or other optical disk storage, magnetic disk storage or other magnetic storage devices, or any other medium that can be used to carry or store desired program code in the form of instructions or data structures and that can be accessed by a computer. Combinations of the above should also be included within the scope of computer-readable media.

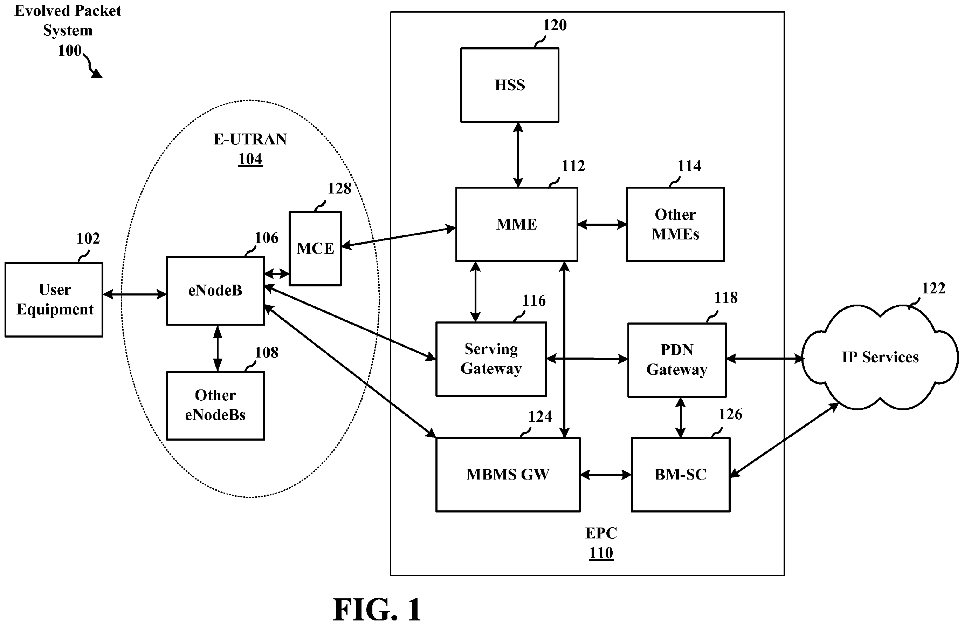

FIG. 1 is a diagram illustrating a Long Term Evolution (LTE) network architecture 100. The LTE network architecture 100 may be referred to as an Evolved Packet System (EPS) 100. The EPS 100 may include one or more user equipment (UE) 102, an Evolved UMTS Terrestrial Radio Access Network (E-UTRAN) 104, an Evolved Packet Core (EPC) 110, and an operator's Internet Protocol (IP) Services 122. The EPS can interconnect with other access networks, but for simplicity those entities/interfaces are not shown. As shown, the EPS provides packet-switched services, however, as those skilled in the art will readily appreciate, the various concepts presented throughout this disclosure may be extended to networks providing circuit-switched services.

The E-UTRAN 104 includes the evolved Node B (eNB) 106 and other eNBs 108, and may include a Multicast Coordination Entity (MCE) 128. The eNB 106 may be connected to the other eNBs 108 via a backhaul (e.g., an X2 interface). The MCE 128 allocates time/frequency radio resources for evolved Multimedia Broadcast Multicast Service (MBMS) (eMBMS), and determines the radio configuration (e.g., a modulation and coding scheme (MCS)) for the eMBMS. The MCE 128 may be a separate entity or part of the eNB 106. The eNB 106 may also be referred to as a base station, a Node B, an access point, a base transceiver station, a radio base station, a radio transceiver, a transceiver function, a basic service set (BSS), an extended service set (ESS), or some other suitable terminology. The eNB 106 provides an access point to the EPC 110 for a UE 102. Examples of UEs 102 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, or any other similar functioning device. The UE 102 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

The eNB 106 is connected to the EPC 110. The EPC 110 may include a Mobility Management Entity (MME) 112, a Home Subscriber Server (HSS) 120, other MMEs 114, a Serving Gateway 116, a Multimedia Broadcast Multicast Service (MBMS) Gateway 124, a Broadcast Multicast Service Center (BM-SC) 126, and a Packet Data Network (PDN) Gateway 118. The MME 112 is the control node that processes the signaling between the UE 102 and the EPC 110. Generally, the MME 112 provides bearer and connection management. All user IP packets are transferred through the Serving Gateway 116, which itself is connected to the PDN Gateway 118. The PDN Gateway 118 provides UE IP address allocation as well as other functions. The PDN Gateway 118 and the BM-SC 126 are connected to the IP Services 122. The IP Services 122 may include the Internet, an intranet, an IP Multimedia Subsystem (IMS), a PS Streaming Service (PSS), and/or other IP services. The BM-SC 126 may provide functions for MBMS user service provisioning and delivery. The BM-SC 126 may serve as an entry point for content provider MBMS transmission, may be used to authorize and initiate MBMS Bearer Services within a PLMN, and may be used to schedule and deliver MBMS transmissions. The MBMS Gateway 124 may be used to distribute MBMS traffic to the eNBs (e.g., 106, 108) belonging to a Multicast Broadcast Single Frequency Network (MBSFN) area broadcasting a particular service, and may be responsible for session management (start/stop) and for collecting eMBMS related charging information.

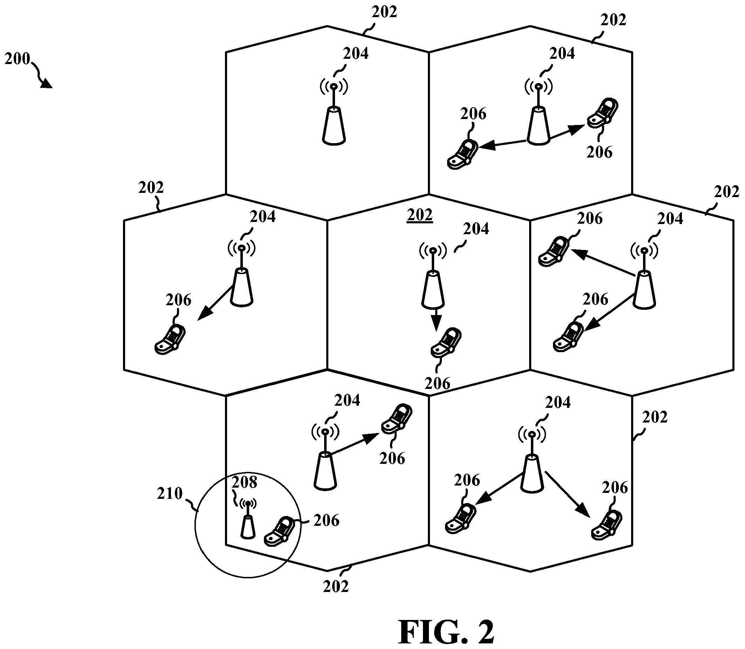

FIG. 2 is a diagram illustrating an example of an access network 200 in an LTE network architecture. In this example, the access network 200 is divided into a number of cellular regions (cells) 202. One or more lower power class eNBs 208 may have cellular regions 210 that overlap with one or more of the cells 202. The lower power class eNB 208 may be a femto cell (e.g., home eNB (HeNB)), pico cell, micro cell, or remote radio head (RRH). The macro eNBs 204 are each assigned to a respective cell 202 and are configured to provide an access point to the EPC 110 for all the UEs 206 in the cells 202. There is no centralized controller in this example of an access network 200, but a centralized controller may be used in alternative configurations. The eNBs 204 are responsible for all radio related functions including radio bearer control, admission control, mobility control, scheduling, security, and connectivity to the serving gateway 116. An eNB may support one or multiple (e.g., three) cells (also referred to as a sectors). The term "cell" can refer to the smallest coverage area of an eNB and/or an eNB subsystem serving are particular coverage area. Further, the terms "eNB," "base station," and "cell" may be used interchangeably herein.

The modulation and multiple access scheme employed by the access network 200 may vary depending on the particular telecommunications standard being deployed. In LTE applications, orthogonal frequency division multiplexing (OFDM) is used on the downlink (DL) and single carrier frequency division multiple access (SC-FDMA) is used on the uplink (UL) to support both frequency division duplex (FDD) and time division duplex (TDD). As those skilled in the art will readily appreciate from the detailed description to follow, the various concepts presented herein are well suited for LTE applications. However, these concepts may be readily extended to other telecommunication standards employing other modulation and multiple access techniques. By way of example, these concepts may be extended to Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. These concepts may also be extended to Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), IEEE 802.11 (Wi-Fi), IEEE 802.16 (WiMAX), IEEE 802.20, and Flash-OFDM employing OFDMA. UTRA, E-UTRA, UMTS, LTE and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

The eNBs 204 may have multiple antennas supporting MIMO technology. The use of MIMO technology enables the eNBs 204 to exploit the spatial domain to support spatial multiplexing, beamforming, and transmit diversity. Spatial multiplexing may be used to transmit different streams of data simultaneously on the same frequency. The data streams may be transmitted to a single UE 206 to increase the data rate or to multiple UEs 206 to increase the overall system capacity. This is achieved by spatially precoding each data stream (i.e., applying a scaling of an amplitude and a phase) and then transmitting each spatially precoded stream through multiple transmit antennas on the DL. The spatially precoded data streams arrive at the UE(s) 206 with different spatial signatures, which enables each of the UE(s) 206 to recover the one or more data streams destined for that UE 206. On the UL, each UE 206 transmits a spatially precoded data stream, which enables the eNB 204 to identify the source of each spatially precoded data stream.

Spatial multiplexing is generally used when channel conditions are good. When channel conditions are less favorable, beamforming may be used to focus the transmission energy in one or more directions. This may be achieved by spatially precoding the data for transmission through multiple antennas. To achieve good coverage at the edges of the cell, a single stream beamforming transmission may be used in combination with transmit diversity.

In the detailed description that follows, various aspects of an access network will be described with reference to a MIMO system supporting OFDM on the DL. OFDM is a spread-spectrum technique that modulates data over a number of subcarriers within an OFDM symbol. The subcarriers are spaced apart at precise frequencies. The spacing provides "orthogonality" that enables a receiver to recover the data from the subcarriers. In the time domain, a guard interval (e.g., cyclic prefix) may be added to each OFDM symbol to combat inter-OFDM-symbol interference. The UL may use SC-FDMA in the form of a discrete Fourier transform (DFT)-spread OFDM signal to compensate for high peak-to-average power ratio (PAPR).

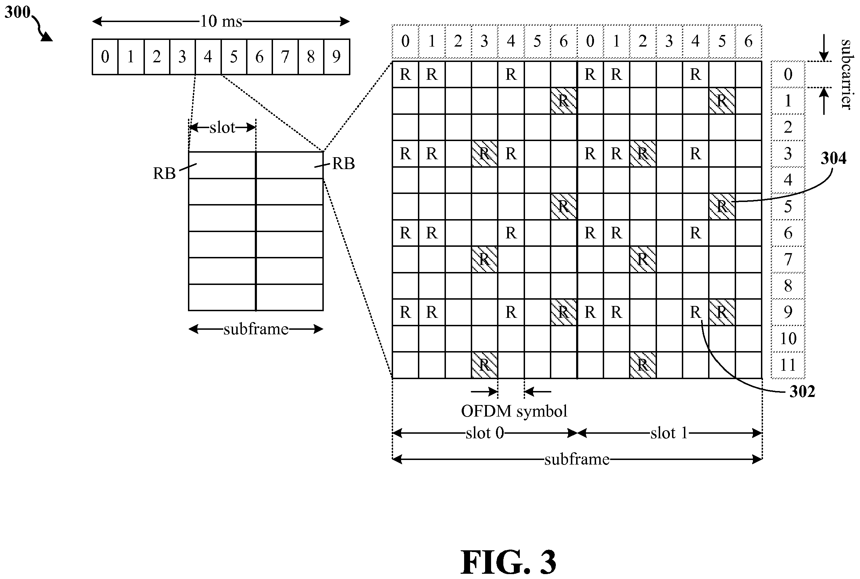

FIG. 3 is a diagram 300 illustrating an example of a DL frame structure in LTE. A frame (10 ms) may be divided into 10 equally sized subframes. Each subframe may include two consecutive time slots. A resource grid may be used to represent two time slots, each time slot including a resource block. The resource grid is divided into multiple resource elements. In LTE, for a normal cyclic prefix, a resource block contains 12 consecutive subcarriers in the frequency domain and 7 consecutive OFDM symbols in the time domain, for a total of 84 resource elements. For an extended cyclic prefix, a resource block contains 12 consecutive subcarriers in the frequency domain and 6 consecutive OFDM symbols in the time domain, for a total of 72 resource elements. Some of the resource elements, indicated as R 302, 304, include DL reference signals (DL-RS). The DL-RS include Cell-specific RS (CRS) (also sometimes called common RS) 302 and UE-specific RS (UE-RS) 304. UE-RS 304 are transmitted only on the resource blocks upon which the corresponding physical DL shared channel (PDSCH) is mapped. The number of bits carried by each resource element depends on the modulation scheme. Thus, the more resource blocks that a UE receives and the higher the modulation scheme, the higher the data rate for the UE.

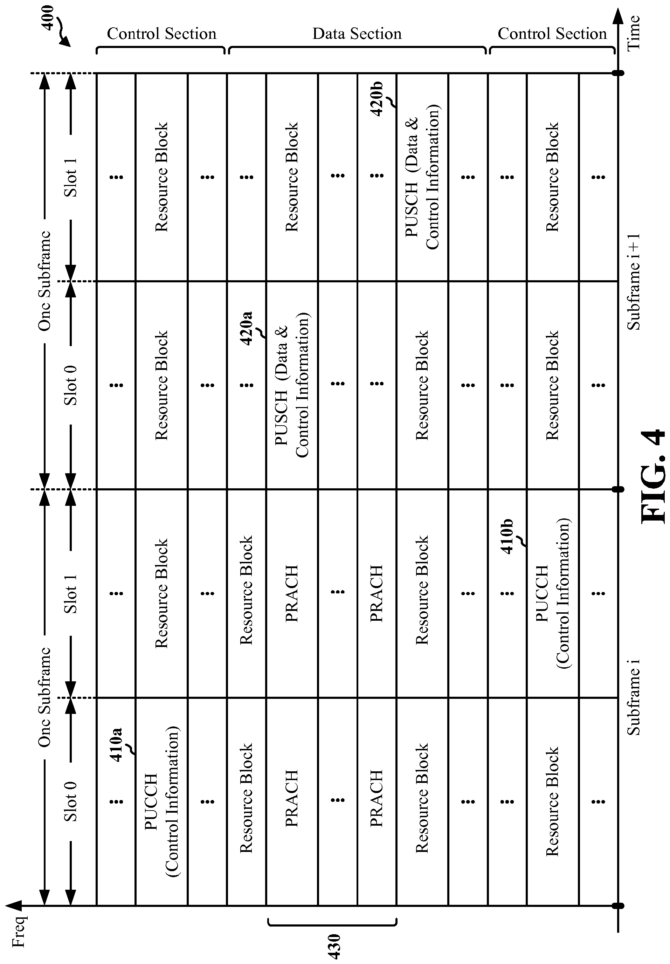

FIG. 4 is a diagram 400 illustrating an example of an UL frame structure in LTE. The available resource blocks for the UL may be partitioned into a data section and a control section. The control section may be formed at the two edges of the system bandwidth and may have a configurable size. The resource blocks in the control section may be assigned to UEs for transmission of control information. The data section may include all resource blocks not included in the control section. The UL frame structure results in the data section including contiguous subcarriers, which may allow a single UE to be assigned all of the contiguous subcarriers in the data section.

A UE may be assigned resource blocks 410a, 410b in the control section to transmit control information to an eNB. The UE may also be assigned resource blocks 420a, 420b in the data section to transmit data to the eNB. The UE may transmit control information in a physical UL control channel (PUCCH) on the assigned resource blocks in the control section. The UE may transmit only data or both data and control information in a physical UL shared channel (PUSCH) on the assigned resource blocks in the data section. A UL transmission may span both slots of a subframe and may hop across frequency.

A set of resource blocks may be used to perform initial system access and achieve UL synchronization in a physical random access channel (PRACH) 430. The PRACH 430 carries a random sequence and cannot carry any UL data/signaling. Each random access preamble occupies a bandwidth corresponding to six consecutive resource blocks. The starting frequency is specified by the network. That is, the transmission of the random access preamble is restricted to certain time and frequency resources. There is no frequency hopping for the PRACH. The PRACH attempt is carried in a single subframe (1 ms) or in a sequence of few contiguous subframes and a UE can make only a single PRACH attempt per frame (10 ms).

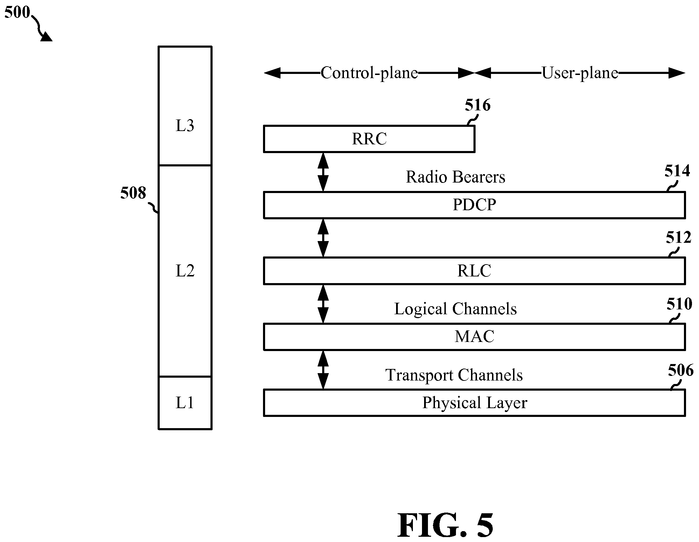

FIG. 5 is a diagram 500 illustrating an example of a radio protocol architecture for the user and control planes in LTE. The radio protocol architecture for the UE and the eNB is shown with three layers: Layer 1, Layer 2, and Layer 3. Layer 1 (L1 layer) is the lowest layer and implements various physical layer signal processing functions. The L1 layer will be referred to herein as the physical layer 506. Layer 2 (L2 layer) 508 is above the physical layer 506 and is responsible for the link between the UE and eNB over the physical layer 506.

In the user plane, the L2 layer 508 includes a media access control (MAC) sublayer 510, a radio link control (RLC) sublayer 512, and a packet data convergence protocol (PDCP) 514 sublayer, which are terminated at the eNB on the network side. Although not shown, the UE may have several upper layers above the L2 layer 508 including a network layer (e.g., IP layer) that is terminated at the PDN gateway 118 on the network side, and an application layer that is terminated at the other end of the connection (e.g., far end UE, server, etc.).

The PDCP sublayer 514 provides multiplexing between different radio bearers and logical channels. The PDCP sublayer 514 also provides header compression for upper layer data packets to reduce radio transmission overhead, security by ciphering the data packets, and handover support for UEs between eNBs. The RLC sublayer 512 provides segmentation and reassembly of upper layer data packets, retransmission of lost data packets, and reordering of data packets to compensate for out-of-order reception due to hybrid automatic repeat request (HARQ). The MAC sublayer 510 provides multiplexing between logical and transport channels. The MAC sublayer 510 is also responsible for allocating the various radio resources (e.g., resource blocks) in one cell among the UEs. The MAC sublayer 510 is also responsible for HARQ operations.

In the control plane, the radio protocol architecture for the UE and eNB is substantially the same for the physical layer 506 and the L2 layer 508 with the exception that there is no header compression function for the control plane. The control plane also includes a radio resource control (RRC) sublayer 516 in Layer 3 (L3 layer). The RRC sublayer 516 is responsible for obtaining radio resources (e.g., radio bearers) and for configuring the lower layers using RRC signaling between the eNB and the UE.

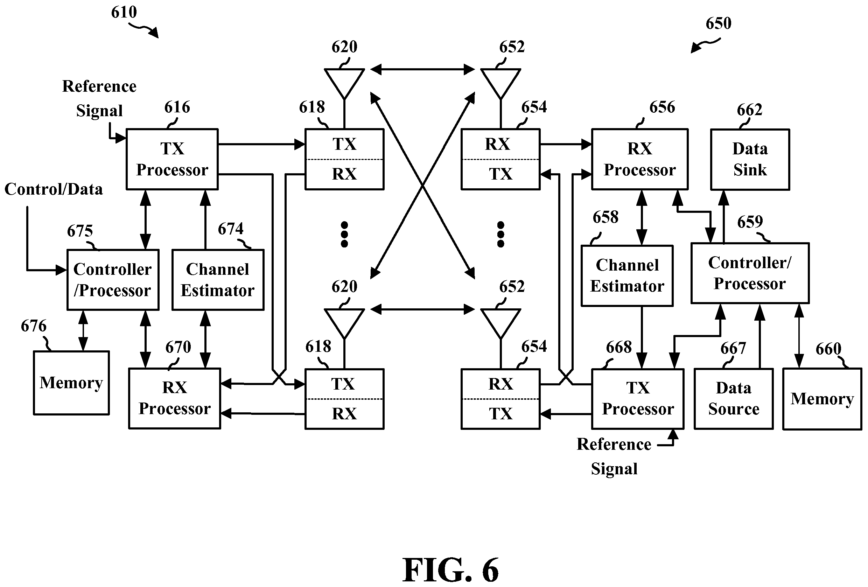

FIG. 6 is a block diagram of an eNB 610 in communication with a UE 650 in an access network. In the DL, upper layer packets from the core network are provided to a controller/processor 675. The controller/processor 675 implements the functionality of the L2 layer. In the DL, the controller/processor 675 provides header compression, ciphering, packet segmentation and reordering, multiplexing between logical and transport channels, and radio resource allocations to the UE 650 based on various priority metrics. The controller/processor 675 is also responsible for HARQ operations, retransmission of lost packets, and signaling to the UE 650.

The transmit (TX) processor 616 implements various signal processing functions for the L1 layer (i.e., physical layer). The signal processing functions include coding and interleaving to facilitate forward error correction (FEC) at the UE 650 and mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols are then split into parallel streams. Each stream is then mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 674 may be used to determine the coding and modulation scheme, as well as for spatial processing. The channel estimate may be derived from a reference signal and/or channel condition feedback transmitted by the UE 650. Each spatial stream may then be provided to a different antenna 620 via a separate transmitter 618TX. Each transmitter 618TX may modulate an RF carrier with a respective spatial stream for transmission.

At the UE 650, each receiver 654RX receives a signal through its respective antenna 652. Each receiver 654RX recovers information modulated onto an RF carrier and provides the information to the receive (RX) processor 656. The RX processor 656 implements various signal processing functions of the L1 layer. The RX processor 656 may perform spatial processing on the information to recover any spatial streams destined for the UE 650. If multiple spatial streams are destined for the UE 650, they may be combined by the RX processor 656 into a single OFDM symbol stream. The RX processor 656 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the eNB 610. These soft decisions may be based on channel estimates computed by the channel estimator 658. The soft decisions are then decoded and deinterleaved to recover the data and control signals that were originally transmitted by the eNB 610 on the physical channel. The data and control signals are then provided to the controller/processor 659.

The controller/processor 659 implements the L2 layer. The controller/processor can be associated with a memory 660 that stores program codes and data. The memory 660 may be referred to as a computer-readable medium. In the UL, the controller/processor 659 provides demultiplexing between transport and logical channels, packet reassembly, deciphering, header decompression, control signal processing to recover upper layer packets from the core network. The upper layer packets are then provided to a data sink 662, which represents all the protocol layers above the L2 layer. Various control signals may also be provided to the data sink 662 for L3 processing. The controller/processor 659 is also responsible for error detection using an acknowledgement (ACK) and/or negative acknowledgement (NACK) protocol to support HARQ operations.

In the UL, a data source 667 is used to provide upper layer packets to the controller/processor 659. The data source 667 represents all protocol layers above the L2 layer. Similar to the functionality described in connection with the DL transmission by the eNB 610, the controller/processor 659 implements the L2 layer for the user plane and the control plane by providing header compression, ciphering, packet segmentation and reordering, and multiplexing between logical and transport channels based on radio resource allocations by the eNB 610. The controller/processor 659 is also responsible for HARQ operations, retransmission of lost packets, and signaling to the eNB 610.

Channel estimates derived by a channel estimator 658 from a reference signal or feedback transmitted by the eNB 610 may be used by the TX processor 668 to select the appropriate coding and modulation schemes, and to facilitate spatial processing. The spatial streams generated by the TX processor 668 may be provided to different antenna 652 via separate transmitters 654TX. Each transmitter 654TX may modulate an RF carrier with a respective spatial stream for transmission.

The UL transmission is processed at the eNB 610 in a manner similar to that described in connection with the receiver function at the UE 650. Each receiver 618RX receives a signal through its respective antenna 620. Each receiver 618RX recovers information modulated onto an RF carrier and provides the information to a RX processor 670. The RX processor 670 may implement the L1 layer.

The controller/processor 675 implements the L2 layer. The controller/processor 675 can be associated with a memory 676 that stores program codes and data. The memory 676 may be referred to as a computer-readable medium. In the UL, the control/processor 675 provides demultiplexing between transport and logical channels, packet reassembly, deciphering, header decompression, control signal processing to recover upper layer packets from the UE 650. Upper layer packets from the controller/processor 675 may be provided to the core network. The controller/processor 675 is also responsible for error detection using an ACK and/or NACK protocol to support HARQ operations.

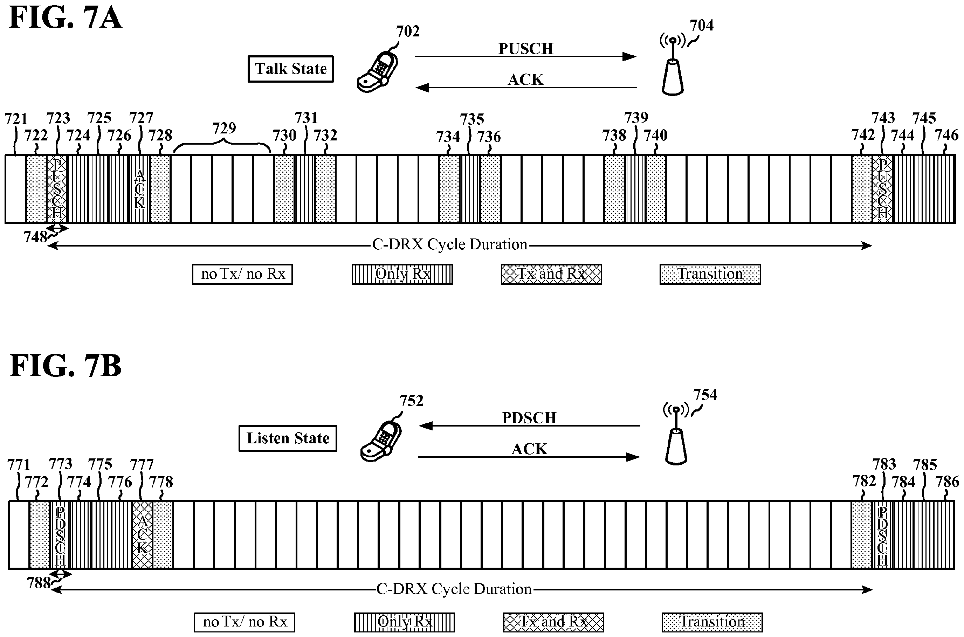

FIGS. 7A-7B illustrate first examples of communication between the UE 702, 752 and the eNB 704, 754 without retransmission during talk and listen states. Such communications may be currently implemented in existing LTE systems. By way of background, LTE provides for dynamic scheduling (DS) and semi-persistent scheduling (SPS). LTE may also provide for persistent scheduling (PS). Although certain aspects of the present disclosure may be described with reference to SPS, one of ordinary skill in the art will understand that those aspects may also be applied to PS without deviating from the scope of the present disclosure. Further, SPS may include PS. Returning to DS, DS uses the Physical Downlink Control Channel (PDCCH) for each Transmission Time Interval (TTI) to allocate DL and UL resources. As such, DS may involve per-subframe scheduling of DL and UL resources. However, a VoLTE system may have a large number of users. Since PDCCH may need to be blindly decoded, a large number of users may overwhelm the PDCCH capability if only dynamic scheduling is utilized. To avoid overwhelming the PDCCH, SPS may be utilized for scheduling DL and UL resources. SPS can be configured by the RRC and activated on the PDCCH. In SPS, scheduling control information may be signaled just once via the PDCCH. Subsequently, the UE may periodically transmit and/or receive based on the pattern defined by SPS interval parameters. The UE may use the same pattern until that pattern is modified or released. SPS may be used for periodic transmissions based on applied configurations. SPS may be suitable for applications with small, predictable, periodic payloads, such as payloads in a VoLTE system.

In existing systems, DS is a tri-state scheduling system. Firstly, in DS, transmission of an ACK message by the UE to the eNB indicates to the eNB that the UE successfully decoded the PDSCH. Secondly, in DS, transmission of a NACK message by the UE to the eNB indicates to the eNB that the UE was unsuccessful in decoding the PDSCH (assuming that the PDCCH decoding was successful). Thirdly, in DS, no reporting (e.g., no transmission of an ACK message nor NACK message) by the UE to the eNB indicates to the eNB that the UE was unsuccessful in decoding the PDCCH. Therefore, in DS, both an ACK message and a NACK message are required.

However, in an aspect of the present disclosure, SPS may not require transmission of the ACK message. Accordingly, SPS may be a dual-state scheduling system. In an aspect of the present disclosure, PDCCH decoding is not required to decode the SPS-configured PDSCH. As such, the third state discussed above with reference to DS (which indicated to the eNB whether the UE was successful in decoding the PDCCH) may be unnecessary. Therefore, in an aspect of the present disclosure, SPS may operate as a dual-state scheduling system. Additional details of such a dual-state system are discussed further detail below. Of course, SPS is merely one example of a persistent scheduling mode that may be utilized in a UE or other wireless communication apparatus within the scope of the present disclosure. Broadly, various aspects of the disclosure may be applicable to any apparatus configured for a persistent scheduling mode, wherein the scheduling of resources for communication follows a persistent pattern and/or format for a suitable duration of time, without necessarily receiving scheduling information for each TTI.

The UE may determine whether the data on the PDSCH was successfully decoded using various processes. In one example, the UE may determine that the PDSCH was successfully decoded when the data on the PDSCH passes a cyclic redundancy check (CRC). The eNB may calculate a binary sequence (i.e., the "check value") for the data blocks to be transmitted, and the eNB may append the "check value" to the data block to be transmitted. After the UE receives the transmission, the UE may calculate its own "check value" using the data blocks. The UE may compare the "check value" appended to the data blocks with a "check value" calculated by the UE. If the "check value" calculated by the UE does not match the "check value" appended to the data block, the UE may determine that the UE did not successfully decode the data on the PDSCH. However, if the "check value" calculated by the UE matches the "check value" appended to the data block, the UE may determine that the UE successfully decoded the data on the PDSCH. Nevertheless, the foregoing is merely one example of a process that may be used by the UE to determine whether the data on the PDSCH was successfully decoded. One of ordinary skill in the art will understand that the UE may use alternative processes for making such determinations without deviating from the scope of the present disclosure.

LTE may provide for discontinuous reception (DRX). DRX may be utilized to reduce power consumption during periods of reduced activity. With DRX, the UE and eNB may determine periods or phases during which data transfer occurs (i.e., the "on-duration"); at other times, the UE may turn off its receiver and enter a power save state (i.e., the "off-duration"). In many examples, the eNB may refrain from scheduling transmissions during the off-duration of the DRX cycle. Accordingly, DRX can reduce the transceiver duty cycle. The UE may maintain two DRX cycles-a Short DRX cycle and a Long DRX cycle. The Long DRX cycle may have a duration of 10 to 2560 subframes. The Short DRX cycle may have a duration of approximately 2 to 640 subframes. The Short DRX cycle may be used in applications that require relatively small transmissions of data at short but regular intervals, such as VoIP and/or VoLTE. DRX may be used when the UE is in an Idle State or Connected State (C-DRX). In C-DRX, the cycle duration may be defined by the eNB. The C-DRX cycle duration can vary from a few milliseconds to a few seconds. In the example discussed herein, the C-DRX cycle duration is 40 ms. However, one of ordinary skill in the art will understand that alternative C-DRX cycle durations may be used without deviating from the scope of the present disclosure.

FIG. 7A illustrates communications when the UE 702 is in the talk state (e.g., UL state). In the talk state, the UE 702 transmits data to the eNB 704 on a Physical Uplink Shared Channel (PUSCH). The data transmitted on the PUSCH may be referred to herein as a packet, data, or data packet. The packet may be addressed to the eNB 704 in a unicast message. A unicast message may be a message sent to a single destination in a network. Each destination may be identified by a unique address. In comparison, a multicast message may be a message sent simultaneously to a group of two or more destinations in a network. In further comparison, a broadcast message may be a message sent simultaneously to every reachable destination in a network. The UE 702 may perform the PUSCH data transmission during the on-duration 748 of the C-DRX cycle, which occurs at subframe 723. Prior to performing the PUSCH data transmission (subframe 723), the UE 702 transitions (subframe 722) from a power save state (subframe 721) to a transmission-and-reception state (subframe 723). After performing the PUSCH data transmission (subframe 723), the UE 702 remains in a reception-only state (subframes 724, 725, 726, 727).

In response to receiving and successfully decoding the PUSCH data transmission from the UE 702, the eNB 704 transmits an ACK message to the UE 702. The ACK message may be received by the UE 702 at subframe 727. After receiving the ACK message (subframe 727), the UE 702 transitions (subframe 728) from a reception-only state (subframe 727) to a power save state (subframes 729). The UE 702 remains in a power save state for a number of subframes (e.g., subframes 729).

At times, the UE 702 may wake up from the power save state and transition to a reception-only state in order to monitor certain channels. By way of background, there is a slight possibility that the ACK message (received at subframe 727) was, in fact, a NACK message miscoded (e.g., disguised) as an ACK message. Thus, the eNB 704 may transmit a NACK message at subsequent subframes (e.g., subframes 731, 735, 739). Thus, even though the UE 702 received a supposed ACK message at subframe 727, the UE 702 may nonetheless listen for NACK messages at subframes 731, 735, 739. For these reasons, the UE 702 may wake up from the power save state in order to monitor for reception of such NACK messages at subframes 731, 735, 739. However, the process of waking up to a reception-only state at subframes 731, 735, 739 is optional. In some configurations, the UE 702 may not wake up to a reception-only state at subframes 731, 735, 739.

A power save state may be any suitable state generally adapted to reduce power consumption of the UE relative to another state of the UE. For example, the UE may be in the power save state when the UE turns off (e.g., shuts off power to) one or more receiver components, one or more transmitter components, one or more transceiver components, one or more processing components, one or more memory components, and/or otherwise alters any function or process that reduces power consumption by the UE.

The amount of power consumed by the UE 702 depends on the state of the UE. The UE 702 consumes more power in the transition state than the power save state. The UE 702 consumes more power in the reception-only state than the transition state. The UE consumes significantly more power in the transmission-and-reception state than the reception-only state.

In some configurations, the UE 702 may adjust the number of transmission opportunities that it monitors. For example, subframes 731, 735, and 739 represent different transmission opportunities during which a (NACK or ACK) message may be received by the UE 702. As discussed above, power is required to transition (subframes, 730, 734, 738) to the reception-only subframe (subframes 731, 735, 739) and subsequently transition (subframes 732, 736, 740) to the power save state. Accordingly, the UE may reduce power consumption by adjusting the number of transmission opportunities that it monitors during a C-DRX cycle. For example, if the signal-to-noise-ratio (SNR) is low, then the UE 702 may determine to monitor a fewer number of transmission opportunities. However, if the SNR is high, the UE 702 may determine to monitor a greater number of transmission opportunities. As such, the UE 702 may adjust the number of transmission opportunities monitored based on channel conditions in order to reduce power consumption.

In the example provided in FIG. 7A, the C-DRX cycle duration is approximately 40 ms, or 40 subframes. The C-DRX cycle beginning at subframe 723 ends after subframe 742. Another C-DRX cycle begins at subframe 743. At subframe 743, the UE 702 transmits data on the PUSCH and, subsequently, enters a reception-only state for subframes 744, 745, 746 in anticipation of a corresponding ACK message.

While FIG. 7A illustrates communications when the UE 702 is in the talk state (e.g., UL state), FIG. 7B illustrates communications when the UE 752 is in the listen state (e.g., DL state). In the listen state, the UE 754 receives data on the Physical Downlink Shared Channel (PDSCH). The data transmitted on the PDSCH may be referred to herein as a packet, data, or data packet. The packet may be addressed to the UE 752 in a unicast message. A unicast message may be a message sent to a single destination in a network. Each destination may be identified by a unique address. In comparison, a multicast message may be a message sent simultaneously to a group of two or more destinations in a network. In further comparison, a broadcast message may be a message sent simultaneously to every reachable destination in a network. The UE 752 may receive the PDSCH data transmission during the on-duration 788 of the C-DRX cycle, which occurs at subframe 773. Prior to receiving the PDSCH data transmission at subframe 773, the UE 752 transitions (subframe 772) from a power save state (subframe 771) to a reception-only state (subframes 773-776). After receiving the PDSCH data transmission at subframe 773, the UE 752 may remain in a reception-only state for a number of (e.g., subframes 724-727).

In response to receiving and successfully decoding the PDSCH data transmission from the eNB 754, the UE 752 may transmit an ACK message to the eNB 754 at subframe 777. After transmitting the ACK message, the UE 752 transitions (subframe 778) to the power save state. However, a significant amount of power is consumed during the process of transmitting the ACK message in the transmission-and-reception state (subframe 777) and subsequently transitioning (subframe 778) back to the power save state.

The UE 752 may remain in the power save state until the transition (subframe 782) to the next C-DRX cycle. For example, the UE 752 may remain in the power save state until transitioning (subframe 782) to the reception-only state (subframe 783) in anticipation of receiving a PDSCH data transmission (subframe 783). At subframes 784-786, the UE 752 remains in the reception-only state, similar to subframes 774-776 of the preceding C-DRX cycle.

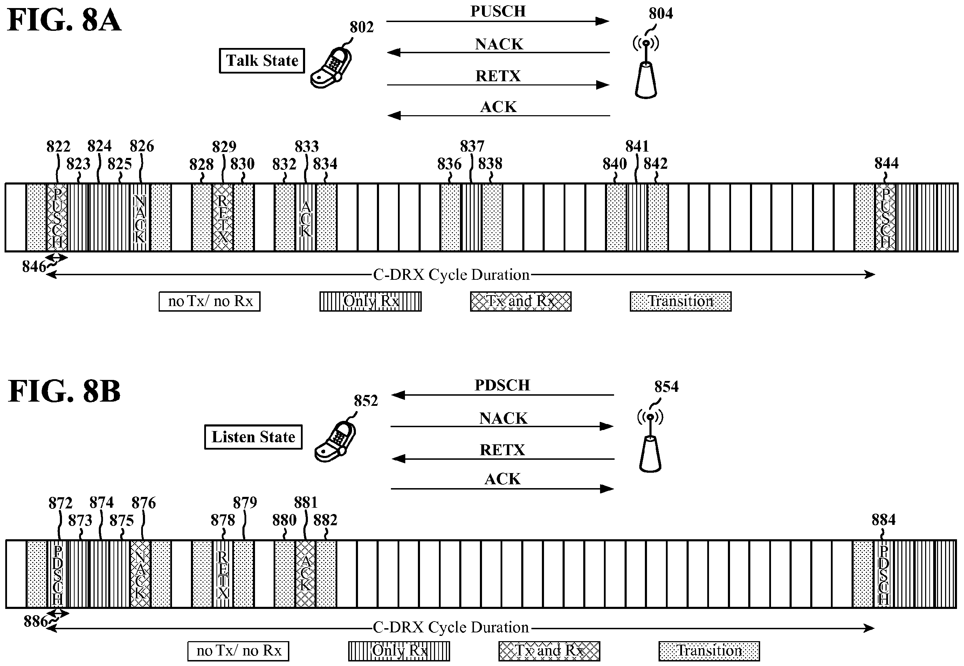

FIGS. 7A-7B illustrate communications between the UE 702, 752 and the eNB 704, 754 when the PUSCH and PDSCH are successfully decoded during the first data transmission, thereby not requiring data retransmission. In comparison, FIGS. 8A-8B illustrate communications between the UE 802, 852 and the eNB 804, 854 when the PUSCH and PDSCH are not successfully decoded during the first data transmission, thereby requiring data retransmission.

FIG. 8A illustrates communications when the UE 802 in the talk state. Such communications may be currently implemented in existing LTE systems when retransmissions exist. The UE 802 transmits data on the PUSCH to the eNB 804. The UE 802 may perform the PUSCH data transmission during the on-duration 846 of the C-DRX cycle, which occurs at subframe 822. Afterwards, the UE 802 may remain in the reception-only state for a number of subframes (e.g., subframes 823-826). If the PUSCH data transmission is not successfully decoded by the eNB 804, the eNB 804 may transmit a NACK message to the UE 802 at subframe 826. Afterwards, the UE 802 will transition (subframe 828) to the transmission-and-reception state (subframe 829). In response to receiving the NACK message at subframe 826, the UE 802 may retransmit (RETX) the data at subframe 829. If the retransmitted data was successfully decoded by the eNB 804, the eNB 804 will transmit an ACK to the UE 802 at subframe 833. As previously discussed, even if the UE 802 receives the ACK message at subframe 833, the UE 802 may optionally wake up at certain intervals to a reception-only state (e.g., subframes 837, 841) in order to receive a NACK message if the supposed ACK message (received at subframe 833) was, in fact, a miscoded (e.g., disguised) NACK message. Another C-DRX cycle begins at subframe 844.

The example illustrated in FIG. 8A shows the PDSCH data transmission occurring in subframe 822 and subframe 829. However, in some configurations, the UE 802 may transmit data on the PDSCH in bundled subframes. The bundling of subframes may sometimes be referred to as Transmission Time Interval (TTI) Bundling. Instead of spacing transmission opportunities (e.g., subframes 822 and 829) apart (by 8 subframes, for example), the UE 802 may bundle transmission opportunities in consecutive subframes. For example, the UE 802 may transmit data in subframe 822 and consecutive subframes (e.g., subframes 923, 924, and/or 925). The number of subframes (e.g., 2 subframes, 3 subframes, 4 subframes, etc.) bundled together may vary. Also, subframes may be bundled together even when channel conditions are good (e.g., SNR is low). Existing systems may bundle subframes when channel conditions are poor (e.g., SNR is high). Channel conditions may be poor when the UE 802 is near the edges of its coverage area. However, the present disclosure implements subframe bundling (e.g., TTI bundling) when signal conditions are not poor (e.g., SNR is not high) and/or when the UE 802 is distal to the edges of its coverage area.

The example illustrated in FIG. 8A shows the retransmission of the (first) data packet occurring at subframe 829. In some implementations, such as VoLTE, the UE 802 may have already generated a second data packet at approximately the same time as the retransmission of the (first) data packet. In such circumstances, the UE 802 may bundle the retransmission of the (first) data packet with the transmission of the second data packet. For example, the UE 802 may retransmit the (first) data packet at subframe 829 and transmit the second data packet at subframe 830. In such a configuration, subframes 829, 830 are bundled together. This process may sometimes be referred to as 3-Packet Bundling.

FIG. 8B illustrates communications when the UE 852 in the listen state. The UE 852 may receive a PDSCH data transmission during the on-duration 886 of the C-DRX cycle, which occurs at subframe 872. The UE 852 may remain in the reception-only state for a number of subframes (e.g., subframes 873-875). If the PDSCH data transmission was not successfully decoded by the UE 852, the UE 852 transmits a NACK message to the eNB 854 at subframe 876. In response to receiving the NACK message from the UE 852, the eNB 854 retransmits (RETX) the data to the UE 852 at subframe 878. At subframe 878, the UE 852 is in a reception-only state and therefore may receive the retransmitted data. After receiving the retransmitted data, the UE transitions at subframe 879 to a power save state. At subframe 880, the UE 852 transitions from the power save state to the transmission-and-reception state (subframe 881) to transmit the ACK message to the eNB 854. After transmitting the ACK message at subframe 881, the UE 852 transitions (subframe 882) to the power save state. However, significant power is consumed during the process of transitioning (subframe 880) to the transmission-and-reception state (subframe 881), transmitting the ACK message (at subframe 881), and subsequently transitioning (subframe 882) back to the power save state. The UE 852 may remain in the power save state until the end of the C-DRX cycle. Another C-DRX cycle begins at subframe 884.

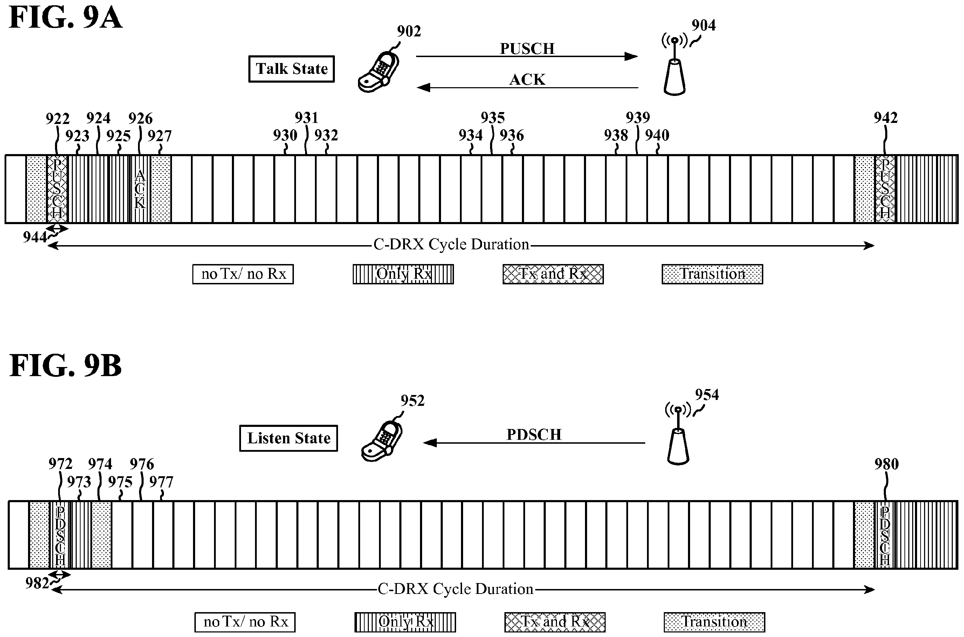

FIGS. 9A-9B illustrate second examples of communication between the UE 902, 952 and the eNB 904, 954 without retransmission during talk and listen states. FIGS. 9A-9B illustrate enhancements of the present disclosure, whereas FIGS. 7A-7B illustrate current implementations in existing LTE systems. In particular, FIGS. 9A-9B illustrate communications resulting in power savings to the UE 902, 952.

FIG. 9A illustrates communications when the UE 952 is in a talk state. The on-duration 944 of the C-DRX cycle occurs at subframe 922. At subframe 922, the UE 902 transmits data on the PUSCH to the eNB 904. Subsequently, the UE 902 enters the reception-only state for a number of subframes (e.g., subframes 923-926). If the transmitted data was successfully decoded by the eNB 904, the eNB 904 will transmit an ACK message to the UE 902. At subframe 926, the UE 902 may receive the ACK message. After receiving the ACK message, the UE 902 transitions (subframe 927) to the power save state.

In the exemplary configuration illustrated in FIG. 9A, the UE 902 does not wake up (to enter a reception-only state) for the remaining portion of the C-DRX cycle. For example, the UE 902 is in the power save state during subframes 930-932, 934-936, and 938-940. In comparison, FIG. 7A illustrates that similar subframes (e.g., subframes 730-731, 734-736, 738-740) were not in the power save state; instead those subframes were in a reception-only state or transition state. As previously discussed, the reception-only state and transition state both consume more power than the power save state. Accordingly, remaining in the power save state (instead of periodically waking up to monitor reception) reduces power consumption.

FIG. 9B illustrates communications when the UE 952 is in the listen state. The UE 952 may be the same as one or more of the UEs described above (e.g., UE 102, UE 206, UE 650, UE 702, UE 752, UE 802, UE 852, UE 902, etc.), and the UE 952 may also be any suitable wireless communication apparatus. The on-duration 982 of the C-DRX cycle occurs at subframe 972. At subframe 972, the UE 952 receives a PDSCH data transmission. The UE 952 attempts to decode the PDSCH data transmission. When the PDSCH data transmission is successfully decoded, according to an aspect of the present disclosure, the UE 954 refrains from transmitting an ACK message to the eNB 954. The UE 952 remains in a reception-only state for the subframe 973. At subframe 974, the UE transitions from the reception-only state to the power save state. Accordingly, the UE 952 is in the power save state during subframes 975-977.

A comparison between FIG. 9B and FIG. 7B reveals the relative power savings for the UE when the UE refrains from transmitting the ACK after the packet is successfully decoded. Firstly, the UE 952 (FIG. 9B) is in a transition state at subframe 974, whereas the UE 752 (FIG. 7B) is in a reception-only state at corresponding subframe 775. As previously discussed, the UE consumes more power in the reception-only state than the transition state. Therefore, the UE 952 (FIG. 9B) consumes less power than the UE 752 (FIG. 7B).

Secondly, the UE 952 (FIG. 9B) is in a power save state at subframe 975, whereas the UE 752 (FIG. 7B) is in a reception-only state at corresponding subframe 776. As previously discussed, the UE consumes more power in the reception-only state than the power save state. Therefore, the UE 952 (FIG. 9B) consumes less power than the UE 752 (FIG. 7B).

Thirdly, the UE 952 (FIG. 9B) is in a power save state at subframe 976, whereas the UE 752 (FIG. 7B) is in a transmission-and-reception state at corresponding subframe 777. As previously discussed, the UE consumes significantly more power when the UE is in a transmission-and-reception state than a power save state. Therefore, the UE 952 (FIG. 9B) consumes less power than the UE 752 (FIG. 7B).

Fourthly, the UE 952 (FIG. 9B) is in a power save state at subframe 977, whereas the UE 752 (FIG. 7B) is in a transition state at corresponding subframe 778. As previously discussed, the UE consumes more power when the UE is in a transition state than a power save state. Therefore, the UE 952 (FIG. 9B) consumes less power than the UE 752 (FIG. 7B).

Therefore, by refraining to transmit the ACK message when decoding of the data was successful, the UE 952 reduces power consumption. The foregoing provides some exemplary advantages that exist when the UE 952 refrains from transmitting the ACK message after the PDSCH data transmission (i.e., packet) is successfully decoded. Additional advantages exist and the examples provided herein shall not limit other advantages understood to one of ordinary skill in the art.

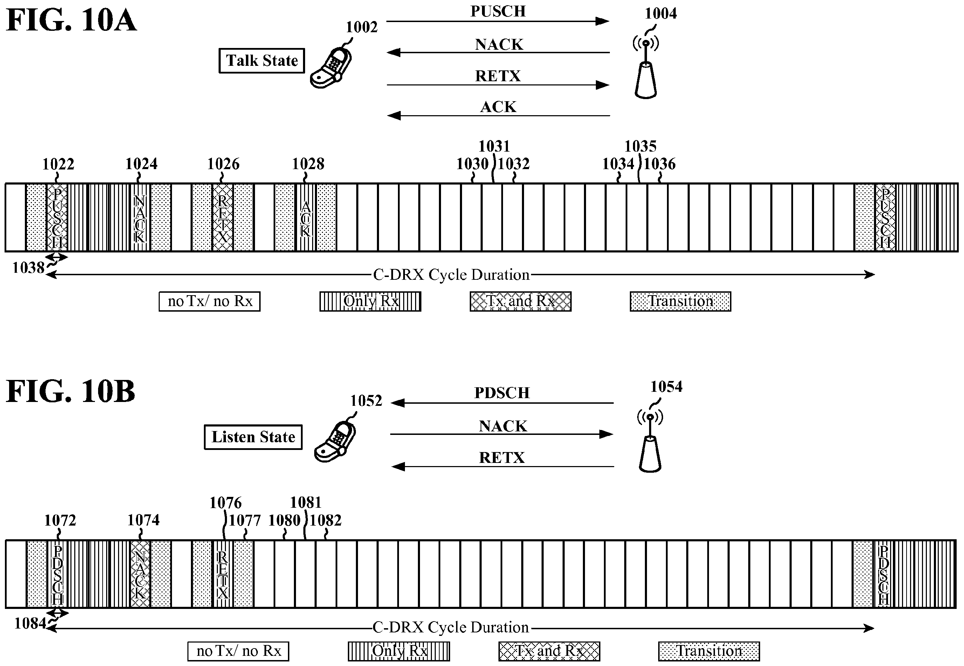

FIGS. 9A and 9B illustrate communications between the UE 902, 952 and eNB 904, 954 when the PUSCH and PDSCH are successfully decoded during the first data transmission. In comparison, FIGS. 10A and 10B illustrate communications between the UE 1002, 1052 and eNB 1004, 1054 when the PUSCH and PDSCH are not successfully decoded during the first data transmission, thereby requiring data retransmission.

FIG. 10A illustrates enhanced communications when the UE 1002 is in a talk state. FIGS. 10A illustrates enhancements of the present disclosure, whereas FIG. 8A illustrates current implementations in existing LTE systems. In FIG. 10A, the on-duration 1038 of the C-DRX cycle occurs at subframe 1022. At subframe 1022, the UE 1002 transmits data on the PUSCH to the eNB 1004. Subsequently, the UE 1002 enters the reception-only state for a number of sub frames. If the transmitted data was not successfully decoded by the eNB 1004, the eNB 1004 will transmit a NACK message to the UE 1002. The UE 1002 may receive the NACK message at subframe 1024. In response to receiving the NACK message from the eNB 1004, the UE 1002 retransmits (RETX) the data to the eNB 1004 at subframe 1026. If the eNB 1004 is successful in decoding the retransmitted data, the eNB 1004 will transmit an ACK message to the UE 1002. The UE 1002 may receive the ACK message at subframe 1028. After receiving the ACK message at subframe 1028, the UE 1002 may transition to the power save state for the remainder of the C-DRX cycle. Accordingly, the UE 1002 may not wake up to monitor reception in the remaining subframes of the C-DRX cycle. For example, UE 1002 will remain in the power save state during subframes 1030-1032 and 1034-1036. In comparison, UE 802 (FIG. 8A) was in a transition state or reception-only state during corresponding subframes 836-838 and 840-842. As previously discussed, the UE consumes more power when the UE is in a transition state or reception-only state than a power save state. Therefore, the UE 1002 (FIG. 10A) consumes less power than the UE 802 (FIG. 8A).

FIG. 10B illustrates communications when the UE 1052 is in the listen state. FIG. 10B illustrates enhancements of the present disclosure, whereas FIG. 8B illustrates current implementations in existing LTE systems. In FIG. 10B, the UE 1052 may be the same as one or more of the UEs described above (e.g., UE 102, UE 206, UE 650, UE 702, UE 752, UE 802, UE 852, UE 902, UE 952, UE 1002, etc.), and the UE 1052 may also be any suitable wireless communication apparatus. The on-duration 1084 of the C-DRX cycle occurs at subframe 1072. At subframe 1072, the UE 1052 receives a PDSCH data transmission from the eNB 1054. The UE 1052 attempts to decode the PDSCH data transmission. If the UE 1052 is unsuccessful in decoding the PDSCH data transmission, the UE 1052 may transmit a NACK message to the eNB at subframe 1074. In response to receiving the NACK message from the UE 1052, the eNB 1054 may retransmit (RETX) the data. The UE 1052 may receive the retransmitted data at subframe 1076. After receiving the retransmitted data, the UE 1052 may (again) attempt to decode the data. If the UE 1052 is successful in decoding the data received at subframe 1076, the UE 1052 may refrain from transmitting an ACK message to the eNB 1054. Also, the UE 1052 may transition (subframe 1077) from the receive-only state (subframe 1076) to the power save state. The UE 1052 may remain in the power save state for the remainder of the C-DRX cycle.

A comparison between FIG. 10B and FIG. 8B reveals the relative power savings for the UE when the UE refrains from transmitting the ACK message after the packet is successfully decoded. Firstly, the UE 1052 (FIG. 10B) is in a power save state at subframe 1080, whereas the UE 852 (FIG. 8B) is in a transition state at corresponding subframe 880. As previously discussed, the UE consumes more power when the UE is in a transition state than a power save state. Therefore, the UE 1052 (FIG. 10B) consumes less power than the UE 852 (FIG. 8B).

Secondly, the UE 1052 (FIG. 10B) is in a power save state at subframe 1081, whereas the UE 852 (FIG. 8B) is in a transmission-and-reception state at corresponding subframe 881. As previously discussed, the UE consumes significantly more power when the UE is in a transmission-and-reception state than a power save state. Therefore, the UE 1052 (FIG. 10B) consumes less power than the UE 852 (FIG. 8B).

Thirdly, the UE 1052 (FIG. 10B) is in a power save state at subframe 1082, whereas the UE 852 (FIG. 8B) is in a transition state at corresponding subframe 882. As previously discussed, the UE consumes more power when the UE is in a transition state than a power save state. Therefore, the UE 1052 (FIG. 10B) consumes less power than the UE 852 (FIG. 8B).

Therefore, by refraining to transmit the ACK message when decoding of the data was successful, the UE 1052 reduces power consumption. The foregoing provides some exemplary advantages that exist when the UE 1052 refrains from transmitting the ACK message after the PDSCH data transmission (i.e., packet) is successfully decoded. Additional advantages exist and the examples provided herein shall not limit other advantages understood to one of ordinary skill in the art.

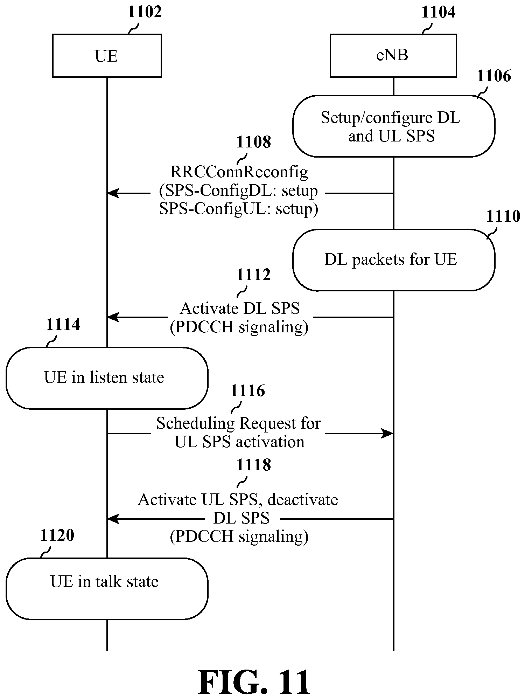

FIG. 11 is an illustration of a first signaling sequence for switching among the listen state (e.g., DL) and the talk state (e.g., UL). The UE 1102 may be the same as one or more of the UEs described above (e.g., UE 102, UE 650, UE 702, UE 752, UE 802, UE 852, UE 902, UE 952, UE 1002, UE 1052, etc.), and the UE 1102 may also be any suitable wireless communication apparatus. The eNB 1104 may be the same as one or more of the eNBs described above (e.g., eNB 106, eNB 204, eNB 704, eNB 754, eNB 804, eNB 854, eNB 904, eNB 954, eNB 1004, eNB 1054, etc.), and the eNB 1104 may also be any suitable apparatus configured for wireless communication. For example, the eNB 1104 may setup UL SPS with 40 ms configuration using RRC signaling. At step 1106, the eNB 1104 may setup and/or configure the DL and/or UP SPS parameters. Subsequently, at step 1108, the eNB 1104 may transmit an RRCConnReconfig message. The RRCConnReconfig message may setup DL and/or UL SPS configurations. At step 1110, the eNB 1104 may prepare the DL packets for the UE 1102. Afterwards, at step 1112, the eNB 1104 may use PDCCH signaling to activate DL SPS. At step 1114, UE 1102 enters the listen state (i.e., DL). While transitioning from the talk state (i.e., UL) to the listen state (i.e., DL), implicit release may be used for UL SPS deactivation. Silence Descriptor (SID) frames may be sent via DS. When transitioning from the listen state (i.e., DL) to the talk state (i.e., UL), UL SPS is activated. Also, the UE 1102 may transmit a scheduling request for UL SPS activation to the eNB 1104. Afterwards, at step 1118, the eNB 1104 may use PDCCH signaling to activate UL SPS and deactivate DL SPS. As a result, at 1120, the UE 1102 may enter the talk state (i.e., UL).

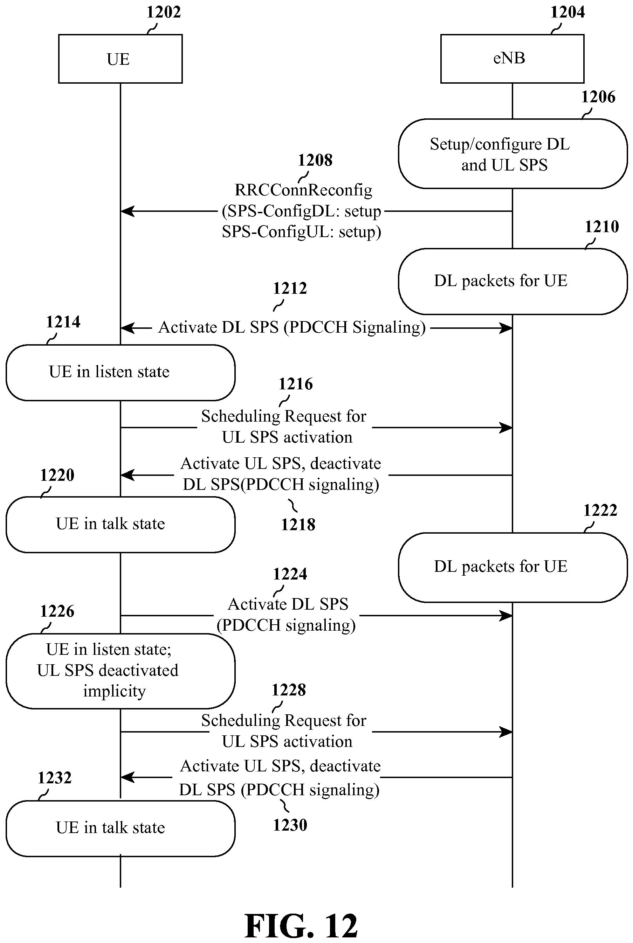

FIG. 12 is an illustration of a second signaling sequence for switching among the listen state (e.g., DL) and the talk state (e.g., UL). The UE 1202 may be the same as one or more of the UEs described above (e.g., UE 102, UE 650, UE 702, UE 752, UE 802, UE 852, UE 902, UE 952, UE 1002, UE 1052, UE 1102, etc.), and the UE 1202 may also be any suitable wireless communication apparatus. The eNB 1204 may be the same as one or more of the eNBs described above (e.g., eNB 106, eNB 204, eNB 704, eNB 754, eNB 804, eNB 854, eNB 904, eNB 954, eNB 1004, eNB 1054, 1104, etc.), and the eNB 1204 may also be any suitable apparatus configured for wireless communication. In some configurations, there may exist two simultaneous UL SPS configurations-one with 40 ms and another with 160 ms. One configuration may be deactivated while the other configuration is activated as the UE 1202 transitions between talk and listen states. At step 1206, the eNB 1204 may setup and/or configure the DL and/or UP SPS parameters. Subsequently, at step 1208, the eNB 1204 may transmit an RRCConnReconfig message. The RRCConnReconfig message may setup DL and/or UL SPS configurations. At step 1210, the eNB 1204 may prepare the DL packets for the UE 1202. Afterwards, at step 1212, the eNB 1204 may use PDCCH signaling to activate DL SPS. At step 1214, UE 1202 is in a listen (i.e., DL) state. Subsequently, at step 1216, the UE 1202 may transmit a scheduling request for UL SPS activation to the eNB 1204. Afterwards, at step 1218, the eNB 1204 may use PDCCH signaling to activate UL SPS and deactivate DL SPS. As a result, at step 1220, the UE 1202 may enter the talk state (i.e., UL). At step 1222, the eNB 1204 may prepare another DP packet for the UE 1202. Subsequently, at step 1224, the UE 1202 may use PDCCH signaling to activate DL SPS. At step 1226, the UE 1202 enters the listen state (i.e., DL) and UL SPS is implicitly deactivated. Afterwards, at step 1228, the UE 1202 may transmit a scheduling request for UL SPS activation to the eNB 1204. In response, at step 1230, the eNB 1204 may use PDCCH signaling to activate UL SPS and deactivate DL SPS. As a result, at step 1232, the UE 1202 may (again) enter the talk state (i.e., UL).

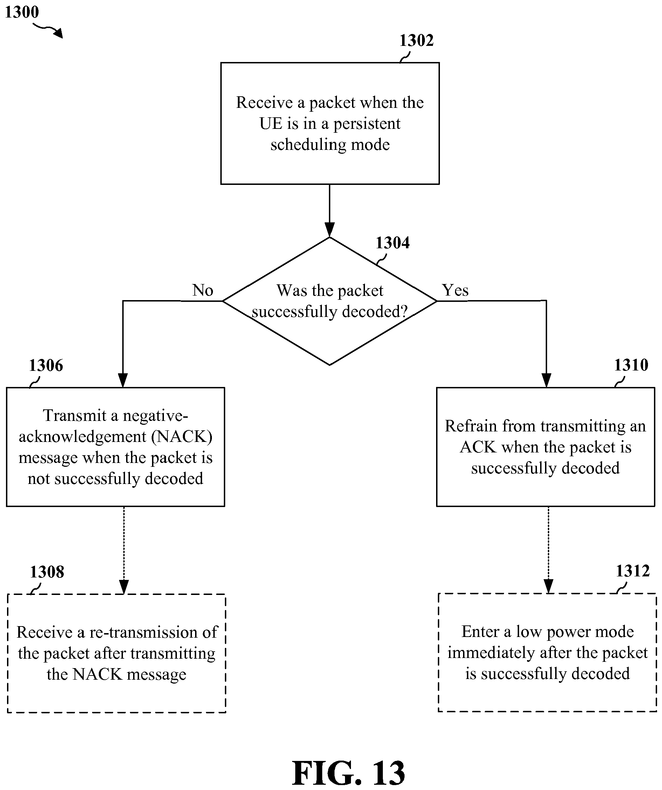

FIG. 13 is a flow chart 1300 of various methods of wireless communication. The various methods may be performed by a UE. At step 1302, the UE receives a packet when the UE is in a persistent scheduling mode. A persistent scheduling mode may be any mode wherein DL and/or UL resources are scheduled for less than the entirety of a transmission cycle. An example of a persistent scheduling mode is SPS. SPS has been described in great detail above and will not be repeated for the sake of brevity. However, one of ordinary skill in the art will appreciate that persistent scheduling modes other than SPS exist and that such other modes do not deviate from the scope of the present disclosure. Referring back to FIG. 10B, the UE 1052 receives a PDSCH data transmission at subframe 1072 when the UE 1052 is in an SPS mode. At step 1304, the UE may determine whether the packet (e.g., PDSCH data transmission) was successfully decoded. If the packet was not successfully decoded, at step 1306, the UE transmits a NACK message. For example, referring back to FIG. 10B, the UE transmits the NACK message at subframe 1074.

In some configurations, at step 1308, the UE may receive a retransmission of the packet after transmitting the NACK message. For example, referring back to FIG. 10B, the UE 1052 may receive the retransmission of the packet at subframe 1076. In some configurations, the retransmitted packet is bundled with a second packet comprising content different from content of the packet.

If, at step 1304, the UE did successfully decode the packet, then, at step 1310, the UE refrains from transmitting an ACK message. For example, referring back to FIG. 9B, the UE 952 refrains from transmitting an ACK message at subframes 975-977 because the PDSCH data transmission received at subframe 972 was successfully decoded. As such, the UE 952 transmits no ACK message during the C-DRX cycle.

At step 1312, the packet is received in bundled subframes when the UE is located distal to (e.g., away from) edges of its coverage area. Bundling of subframes, even when the coverage area is not poor, may improve the likelihood of the data successfully reaching its destination.

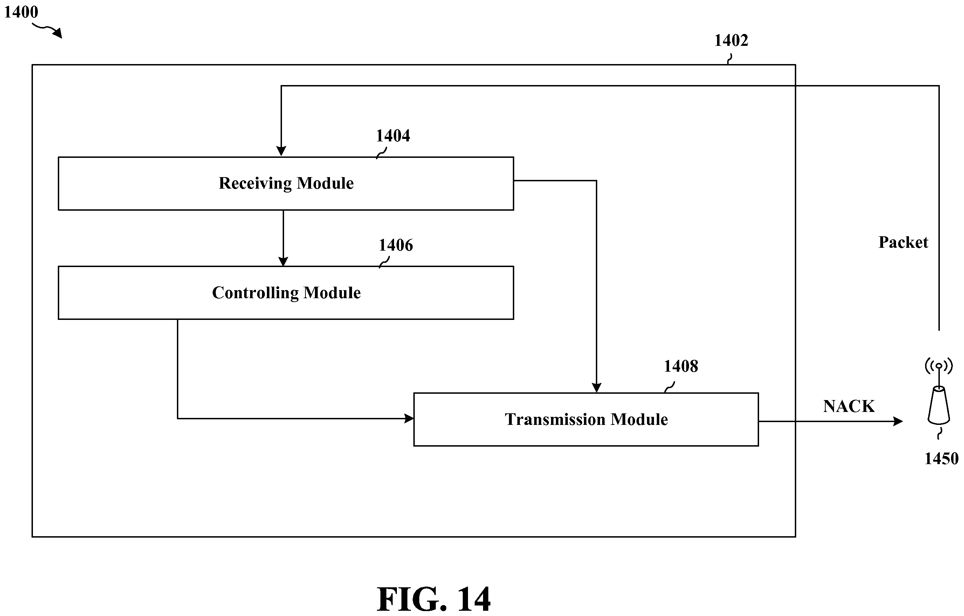

FIG. 14 is a conceptual data flow diagram 1400 illustrating the data flow between different modules/means/components in an exemplary apparatus 1402. The apparatus 1402 may be a UE (e.g., UE 102 in FIG. 1, UE 650 in FIG. 6, UE 702 in FIG. 7A, UE 752 in FIG. 7B, UE 802 in FIG. 8A, UE 852 in FIG. 8B, UE 902 in FIG. 9A, UE 952 in FIG. 9B, UE 1002 in FIG. 10A, UE 1052 in FIG. 10B, UE 1102 in FIG. 11, and/or UE 1202 in FIG. 12). The apparatus 1402 includes a receiving module 1404, a controlling module 1406, and a transmission module 1408.

The receiving module 1404 may be configured to receive a packet when the UE is in a persistent scheduling mode. The transmission module 1408 may be configured to transmit a NACK message when the packet is not successfully decoded. The controlling module 1406 may be configured to refrain from transmitting an ACK message when the packet is successfully decoded.

In some configurations, the controlling module 1406 may be further configured to enter a power save state immediately after the packet is successfully decoded. One of ordinary skill in the art will appreciate that the term "immediately" is not limited to a specific period of time and may vary based on parameters and/or configurations of the communication system. For example, event B may occur "immediately" after event A, even if event B does not occur for a period of time after the occurrence of event A. In some configurations, the receiving module 1404 may be further configured to receive a retransmission of the packet after transmitting the NACK message. The retransmitted packet may be bundled with another packet having different content.

The apparatus may include additional modules that perform each of the steps of the algorithm in the aforementioned flow charts of FIG. 13. As such, each step in the aforementioned flow chart of FIG. 13 may be performed by a module and the apparatus may include one or more of those modules. The modules may be one or more hardware components specifically configured to carry out the stated processes/algorithm, implemented by a processor configured to perform the stated processes/algorithm, stored within a computer-readable medium for implementation by a processor, or some combination thereof.

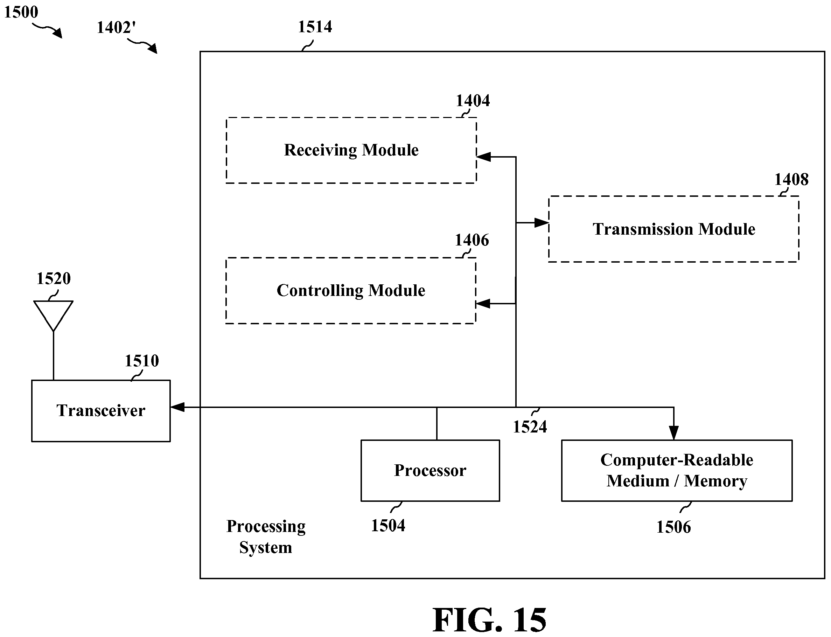

FIG. 15 is a diagram 1500 illustrating an example of a hardware implementation for an apparatus 1402' employing a processing system 1514. In some examples, the apparatus 1402' may be the UE 102 (FIG. 1), the UE 650 (FIG. 6), the UE 702 (FIG. 7A), the UE 752 (FIG. 7B), the UE 802 (FIG. 8A), the UE 852 (FIG. 8B), the UE 902 (FIG. 9A), the UE 952 (FIG. 9B), the UE 1002 (FIG. 10A), the UE 1052 (FIG. 10B), the UE 1102 (FIG. 11), the UE 1202 (FIG. 12), and/or the apparatus 1402 (FIG. 14). The processing system 1514 may be implemented with a bus architecture, represented generally by the bus 1524. The bus 1524 may include any number of interconnecting buses and bridges depending on the specific application of the processing system 1514 and the overall design constraints. The bus 1524 links together various circuits including one or more processors and/or hardware modules, represented by the processor 1504, the modules 1404, 1406, 1408, and the computer-readable medium / memory 1506. The bus 1524 may also link various other circuits such as timing sources, peripherals, voltage regulators, and power management circuits, which are well known in the art, and therefore, will not be described any further.

The processing system 1514 may be coupled to a transceiver 1510. The transceiver 1510 is coupled to one or more antennas 1520. The transceiver 1510 provides a means for communicating with various other apparatus over a transmission medium. The transceiver 1510 receives a signal from the one or more antennas 1520, extracts information from the received signal, and provides the extracted information to the processing system 1514, specifically the receiving module 1404. In addition, the transceiver 1510 receives information from the processing system 1514, specifically the transmission module 1408, and based on the received information, generates a signal to be applied to the one or more antennas 1520. The processing system 1514 includes a processor 1504 coupled to a computer-readable medium / memory 1506. The processor 1504 is responsible for general processing, including the execution of software stored on the computer-readable medium / memory 1506. The software, when executed by the processor 1504, causes the processing system 1514 to perform the various functions described *supra* for any particular apparatus. The computer-readable medium / memory 1506 may also be used for storing data that is manipulated by the processor 1504 when executing software. The processing system further includes at least one of the modules 1404, 1406, and 1408. The modules may be software modules running in the processor 1504, resident/stored in the computer readable medium / memory 1506, one or more hardware modules coupled to the processor 1504, or some combination thereof. The processing system 1514 may be a component of the UE 650 and may include the memory 660 and/or at least one of the TX processor 668, the RX processor 656, and the controller/processor 659.

In one configuration, the apparatus 1402/1402' for wireless communication includes means for receiving a packet when the UE is in a persistent scheduling mode. The apparatus 1402/1402' also includes means for transmitting a NACK message when the packet is not successfully decoded. The apparatus 1402/1402' also includes means for refraining from transmitting an ACK message when the packet is successfully decoded. The apparatus 1402/1402' also includes means for entering a power save state after the packet is successfully decoded. The apparatus 1402/1402' also includes means for receiving a retransmission of the packet after transmitting the NACK message. The aforementioned means may be one or more of the aforementioned modules of the apparatus 1402 and/or the processing system 1514 of the apparatus 1402' configured to perform the functions recited by the aforementioned means. As described *supra,* the processing system 1514 may include the TX Processor 668, the RX Processor 656, and the controller/processor 659. As such, in one configuration, the aforementioned means may be the TX Processor 668, the RX Processor 656, and the controller/processor 659 configured to perform the functions recited by the aforementioned means.

It is understood that the specific order or hierarchy of steps in the processes / flow charts disclosed is an illustration of exemplary approaches. Based upon design preferences, it
it is understood that the specific order or hierarchy of steps in the processes / flow charts may be rearranged. Further, some steps may be combined or omitted. The accompanying method claims present elements of the various steps in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects." Unless specifically stated otherwise, the term "some" refers to one or more. Combinations such as "at least one of A, B, or C," "at least one of A, B, and C," and "A, B, C, or any combination thereof" include any combination of A, B, and/or C, and may include multiples of A, multiples of B, or multiples of C. Specifically, combinations such as "at least one of A, B, or C," "at least one of A, B, and C," and "A, B, C, or any combination thereof' may be A only, B only, C only, A and B, A and C, B and C, or A and B and C, where any such combinations may contain one or more member or members of A, B, or C. Moreover, nothing disclosed herein is intended to be dedicated to the public regardless of whether such disclosure is explicitly recited in the claims. No claim element is to be construed as a means plus function unless the element is expressly recited using the phrase "means for."

## Claims

1. A method (1300) of wireless communication by a user equipment, UE (952, 1052),, the method comprising:
receiving (1302) a packet (972, 1072) when the UE is in a semi-persistent scheduling, SPS, mode and during an on-duration of a discontinuous reception, DRX, cycle;
transmitting (1306) a negative-acknowledgement, NACK, message (1074) when the packet is not successfully decoded; and
refraining (1310) from transmitting an acknowledgement, ACK, message when the packet is successfully decoded, characterised wherein the packet is received in bundled subframes when the UE is located distal to edges of its coverage area.

2. The method (1300) of claim 1, wherein the packet is addressed to the UE (952, 1052) in a unicast message.

3. The method (1300) of claim 1, further comprising entering (1312) a power save state immediately after the packet is successfully decoded.

4. The method (1300) of claim 1, wherein the packet is received during an on-duration of a connected state discontinuous reception, C-DRX, cycle.

5. The method (1300) of claim 1, wherein the packet comprises voice over long term evolution, VoLTE, downlink, DL, traffic.

6. The method (1300) of claim 1, wherein the packet is received on a physical downlink shared channel, PDSCH,.

7. The method (1300) of claim 1, further comprising:
receiving (1308) a retransmission of the packet after transmitting the NACK message, wherein the retransmitted packet is bundled with a second packet comprising content different from content of the packet.

8. An apparatus (1400) for wireless communication, the apparatus comprising:
means adapted for receiving (1404) a packet when the apparatus (1400) is in a semi-persistent scheduling, SPS, mode and during an on-duration of a discontinuous reception, DRX, cycle;
means adapted for transmitting (1408) a negative-acknowledgement, NACK, message when the packet is not successfully decoded; and
means adapted for refraining (1406) from transmitting an acknowledgement, ACK, message when the packet is successfully decoded, characterised wherein the packet is received in bundled subframes when the apparatus is located distal to edges of its coverage area.

9. The apparatus (1400) of claim 8, wherein the packet is addressed to the apparatus in a unicast message.

10. The apparatus (1400) of claim 8, further comprising means for entering a power save state immediately after the packet is successfully decoded.

11. The apparatus (1400) of claim 8, wherein the packet is received during an on-duration of a connected state discontinuous reception, C-DRX, cycle.

12. The apparatus (1400) of claim 8, wherein the packet comprises voice over long term evolution, VoLTE, downlink, DL, traffic.

13. The apparatus (1400) of claim 8, wherein the packet is received on a physical downlink shared channel, PDSCH.

14. The apparatus (1400) of claim 8, further comprising:
means for receiving a retransmission of the packet after transmitting the NACK message, wherein the retransmitted packet is bundled with a second packet comprising content different from content of the packet.

15. A computer program product, comprising:
a computer-readable medium comprising code which when is executed by a computer causes the computer to carry out the steps of any of claims 1 to 7.

## Patentansprüche

1. Ein Verfahren (1300) für Drahtloskommunikation durch eine Nutzereinrichtung bzw. UE (UE = user equipment) (952, 1052), wobei das Verfahren Folgendes aufweist:
Empfangen (1302) eines Pakets (972, 1072), wenn die UE in einem SPS-Modus (SPS = semi-persistent scheduling bzw. semipersistente Einteilung) ist und während einer An-Dauer eines DRX-Zyklus (DRX = discontinuous reception bzw. diskontinuierlicher Empfang);
Senden (1306) einer NACK-Nachricht (NACK = negative-acknowledgement bzw. negative Bestätigung) (1074), wenn das Paket nicht erfolgreich decodiert wird; und
Unterlassen (1310) des Sendens einer ACK-Nachricht (ACK = acknowledgment bzw. Bestätigung), wenn das Paket erfolgreich decodiert wird, **dadurch gekennzeichnet, dass**
das Paket in gebündelten Subrahmen empfangen wird, wenn die UE entfernt zu Rändern ihres Abdeckungsbereichs angeordnet ist.

2. Verfahren (1300) nach Anspruch 1, wobei das Paket an die UE (952, 1052) in einer Unicast-Nachricht adressiert ist.

3. Verfahren (1300) nach Anspruch 1, das weiter Eintreten (1312) in einen Leistungssparzustand aufweist unmittelbar nachdem das Paket erfolgreich decodiert worden ist.

4. Verfahren (1300) nach Anspruch 1, wobei das Paket während einer An-Dauer eines C-DRX-Zyklus (C-DRX = connected state discontinuous reception bzw. diskontinuierlicher Empfang im verbundenen Zustand) empfangen wird.

5. Verfahren (1300) nach Anspruch 1, wobei das Paket VoLTE-DL-Verkehr (VoLTE = voice over long term evolution, DL = downlink bzw. Abwärtsstrecke) aufweist.

6. Verfahren (1300) nach Anspruch 1, wobei das Paket auf einem PDSCH (PDSCH = physical downlink shared channel bzw. physischer, gemeinsam verwendeter Abwärtsstreckenkanal) empfangen wird.

7. Verfahren (1300) nach Anspruch 1, das weiter Folgendes aufweist:
Empfangen (1308) einer erneuten Sendung des Pakets nach Senden der NACK-Nachricht, wobei das erneut gesendete Paket mit einem zweiten Paket gebündelt wird, das Inhalt aufweist, der sich von dem Inhalt des Pakets unterscheidet.

8. Eine Vorrichtung (1400) für Drahtloskommunikation, wobei die Vorrichtung Folgendes aufweist:
Mittel, die ausgelegt sind zum Empfangen (1404) eines Pakets, wenn die Vorrichtung (1400) in einem SPS-Modus (SPS = semi-persistent scheduling bzw. semipersistente Einteilung) ist und während einer An-Dauer eines DRX-Zyklus (DRX = discontinuous reception bzw. diskontinuierlicher Empfang);
Mittel, die ausgelegt sind zum Senden (1408) einer NACK-Nachricht (NACK = negative-acknowledgement bzw. negative Bestätigung), wenn das Paket nicht erfolgreich decodiert wird; und
Mittel, die ausgelegt sind zum Unterlassen (1406) des Sendens einer ACK-Nachricht (ACK = acknowledgment bzw. Bestätigung), wenn das Paket erfolgreich decodiert wird, **dadurch gekennzeichnet, dass**
das Paket in gebündelten Subrahmen empfangen wird, wenn die Vorrichtung entfernt zu Rändern ihres Abdeckungsbereichs angeordnet ist.

9. Vorrichtung (1400) nach Anspruch 8, wobei das Paket an die Vorrichtung in einer Unicast-Nachricht adressiert ist.

10. Vorrichtung (1400) nach Anspruch 8, die weiter Mittel aufweist zum Eintreten in einen Leistungssparzustand unmittelbar nachdem das Paket erfolgreich decodiert worden ist.

11. Vorrichtung (1400) nach Anspruch 8, wobei das Paket während einer An-Dauer eines C-DRX-Zyklus (C-DRX = connected state discontinuous reception bzw. diskontinuierlicher Empfang im verbundenen Zustand) empfangen wird.

12. Vorrichtung (1400) nach Anspruch 8, wobei das Paket VoLTE-DL-Verkehr (VoLTE = voice over long term evolution, DL = downlink bzw. Abwärtsstrecke) aufweist.

13. Vorrichtung (1400) nach Anspruch 8, wobei das Paket auf einem PDSCH (PDSCH = physical downlink shared channel bzw. physischer, gemeinsam verwendeter Abwärtsstreckenkanal) empfangen wird.

14. Vorrichtung (1400) nach Anspruch 8, die weiter Folgendes aufweist:
Mittel zum Empfangen einer erneuten Sendung des Pakets nach Senden der NACK-Nachricht, wobei das erneut gesendete Paket mit einem zweiten Paket gebündelt wird, das Inhalt aufweist, der sich von dem Inhalt des Pakets unterscheidet.

15. Ein Computerprogrammprodukt, das Folgendes aufweist:
ein computerlesbares Medium, das Code aufweist, der, wenn er durch einen Computer ausgeführt wird, den Computer veranlasst zum Durchführen der Schritte nach einem der Ansprüche 1 bis 7.

## Revendications

1. Procédé (1300) de communication sans fil par un équipement utilisateur, UE (952, 1052), le procédé comprenant les étapes suivantes :
la réception (1302) d'un paquet (972, 1072) quand l'UE est en mode de programmation semi-persistante, SPS, et pendant une durée active d'un cycle de réception discontinue, DRX ;
l'émission (1306) d'un message d'accusé de réception négatif, NACK, (1074) quand le paquet n'est pas décodé avec succès ; et
l'abstention (1310) de l'émission d'un message d'accusé de réception, ACK, quand le paquet est décodé avec succès, **caractérisé en ce que** le paquet est reçu dans des sous-trames groupées quand l'UE est situé à distance de limites de sa zone de couverture.

2. Procédé (1300) selon la revendication 1, dans lequel le paquet est adressé à l'UE (952, 1052) dans un message à diffusion unique.

3. Procédé (1300) selon la revendication 1, comprenant en outre l'entrée (1312) dans un état d'économie d'énergie immédiatement après que le paquet a été décodé avec succès.

4. Procédé (1300) selon la revendication 1, dans lequel le paquet est reçu pendant une durée active d'un cycle de réception discontinue à état connecté, C-DRX.

5. Procédé (1300) selon la revendication 1, dans lequel le paquet comprend un trafic de liaison descendante, DL, de voix sur évolution à long terme, VoLTE.

6. Procédé (1300) selon la revendication 1, dans lequel le paquet est reçu sur un canal partagé de liaison descendante physique, PDSCH.

7. Procédé (1300) selon la revendication 1, comprenant en outre :
la réception (1308) d'une réémission du paquet après l'émission du message NACK, dans lequel le paquet réémis est groupé avec un deuxième paquet comprenant un contenu différent du contenu du paquet.

8. Appareil (1400) de communication sans fil, l'appareil comprenant :
des moyens adaptés pour recevoir (1404) un paquet quand l'appareil (1400) est en mode de programmation semi-persistante, SPS, et pendant une durée active d'un cycle de réception discontinue, DRX ;
des moyens adaptés pour émettre (1408) un message d'accusé de réception négatif, NACK, quand le paquet n'est pas décodé avec succès ; et
des moyens adaptés pour empêcher (1406) une émission d'un message d'accusé de réception, ACK, quand le paquet est décodé avec succès, **caractérisé en ce que** le paquet est reçu dans des sous-trames groupées quand l'UE est situé à distance de limites de sa zone de couverture.

9. Appareil (1400) selon la revendication 8, dans lequel le paquet est adressé à l'appareil dans un message à diffusion unique.

10. Appareil (1400) selon la revendication 8, comprenant en outre des moyens pour entrer dans un état d'économie d'énergie immédiatement après que le paquet a été décodé avec succès.

11. Appareil (1400) selon la revendication 8, dans lequel le paquet est reçu pendant une durée active d'un cycle de réception discontinue à état connecté, C-DRX.

12. Appareil (1400) selon la revendication 8, dans lequel le paquet comprend un trafic de liaison descendante, DL, de voix sur évolution à long terme, VoLTE.

13. Appareil (1400) selon la revendication 8, dans lequel le paquet est reçu sur un canal partagé de liaison descendante physique, PDSCH.

14. Appareil (1400) selon la revendication 8, comprenant en outre :
des moyens pour recevoir une réémission du paquet après l'émission du message NACK, dans lequel le paquet réémis est groupé avec un deuxième paquet comprenant un contenu différent du contenu du paquet.

15. Produit programme d'ordinateur, comprenant :
un support lisible par ordinateur comprenant un code qui, quand il est exécuté par un ordinateur, force l'ordinateur à mettre en œuvre les étapes selon l'une quelconque des revendications 1 à 7.
